# FASCICULE DE BREVET EUROPEEN

(11) **EP 1 368 595 B1**
(45) Date de publication et mention de la délivrance du brevet: **27.09.2006**
(21) Numéro de dépôt: 02718243.5
(22) Date de dépôt: 06.03.2002
(51) Int. Cl.: F24C 15/32

(54) **FOUR, NOTAMMENT FOUR TUNNEL**
OFEN, INSBESONDERE TUNNELOFEN
OVEN, IN PARTICULAR A TUNNEL OVEN

(30) Priorité: 13.03.2001 FR 0103372
(43) Date de publication de la demande: 10.12.2003
(73) Titulaire: Gouet S.A., 76260 Eu (FR)
(72) Inventeur: SERGENT, Olivier, F-49460 Feneu (FR); MAGNY, Jean, F-75010 Paris (FR)
(74) Mandataire: Lelkes, Robert
(86) Numéro de dépôt international: PCT/FR2002/000797
(87) Numéro de publication internationale: WO 2002/073093

(56) Documents cités:
- EP-A- 0 419 213
- US-A- 6 049 066

## Description

La présente invention présente un four, notamment un four tunnel.

Des fours tunnels sont mis en oeuvre dans des processus industriels pour réaliser la cuisson de produits à cuire. On trouve de tels fours par exemple dans l'industrie alimentaire.

Les fours tunnels traditionnels comportent un système de convoyage horizontal sur lequel sont positionnés des produits à cuire ainsi qu'un système de chauffage agissant sur le dessus de produit et/ou sur le dessous de celui-ci. Généralement, les produits défilent en continu dans un volume nommé le plus couramment "chambre de cuisson".

La présente invention concerne des fours tunnels dans lesquels le transfert d'énergie du système de chauffage vers les produits à cuire est réalisé de façon naturelle, c'est-à-dire qu'elle ne concerne pas des fours à micro-ondes ou à induction. Elle s'applique aussi bien à des fours tunnels dans lesquels les produits à cuire se déplacent durant la cuisson que des fours où les produits à cuire restent immobiles durant la cuisson.

L'apport d'énergie se fait alors par rayonnement et/ou conduction et/ou convection. Le chauffage par rayonnement est réalisé lorsque le produit à cuire est exposé face à une source chaude. Cette dernière émet alors des ondes électromagnétiques, généralement situées dans l'infrarouge, qui se propagent vers les produits à cuire, ces derniers absorbant l'énergie transportée par ces ondes. La source chaude peut être un radiateur, la flamme directe d'une rampe de brûleur, une résistance électrique, etc....

Le chauffage par conduction est réalisé lorsque le produit à cuire est mis en contact direct avec une source chaude. Un échange thermique est alors réalisé entre la source chaude et le produit à cuire. Divers paramètres thermiques permettent de caractériser cet échange.

Enfin, la convection est un mode de chauffage dans lequel de l'énergie est fournie au produit à cuire par échange de chaleur entre de l'air ou un autre fluide en mouvement autour du produit à cuire. L'air est chauffé par une source chaude et vient au contact du produit à cuire. L'échange thermique entre l'air et le produit dépend notamment de la vitesse de l'air, de sa température, de son hygrométrie et de la surface du produit, ainsi que des paramètres thermiques propres a produit à cuire.

En général, les trois modes de cuisson sont mis en oeuvre dans un four. Toutefois, l'un de ces trois modes est généralement dominant. Selon la nature de la cuisson recherchée, le four choisi sera un four dans lequel un mode de transmission de chaleur, rayonnement, conduction ou convection, sera privilégié. Pour certaines cuissons, il est préférable d'utiliser un mode de chauffage en début de cuisson et un autre mode de chauffage dans la suite de la cuisson. Ainsi par exemple certains produits ne supportent pas de convection du tout en début de cuisson mais acceptent une forte convection lors d'une phase de cuisson ultérieure.

Il existe deux grandes familles de fours tunnels. Un premier type de four tunnel chauffe les produits à cuire essentiellement par rayonnement. L'air à l'intérieur d'un four de ce type est brassé par des circuits d'air ventilé et la turbulence est faible. Le second type de four favorise la convection. Pour ce faire, de l'air chauffé est soufflé à haute vitesse dans le four. L'enceinte du four est alors une zone à haute turbulence favorisant un très bon échange thermique entre l'air s'y trouvant et les produits à cuire de telle sorte que l'apport d'énergie par rayonnement devient négligeable.

Pour réaliser alors une bonne cuisson, il est connu d'utiliser un four tunnel intégrant deux parties distinctes, une première partie pour chauffer les produits à cuire par rayonnement et une seconde partie à haute turbulence. Chacune des parties du four met en oeuvre des techniques différentes si bien que le four tunnel se présente comme l'assemblage de deux fours de structures et de technologies distinctes.

La présente invention a alors pour but de fournir un four, notamment un four tunnel, de structure simple qui permette de réaliser soit un chauffage par rayonnement, soit un chauffage haute turbulence par convection. Avantageusement, un four selon l'invention permettra de réaliser toute combinaison de ces deux types de chauffage. Un four d'après le préambule de la revendication 1 est divulgué par le document US-A-6049066.

A cet effet, le four, notamment four tunnel, qu'elle propose comporte une enceinte destinée à recevoir des produits à cuire sur un plan sensiblement horizontal, des moyens pour souffler à grande vitesse de l'air dans le four ainsi que des moyens de chauffage d'air, l'enceinte du four présentant d'une part des entrées d'air permettant l'injection d'air à l'intérieur de celle-ci et d'autre part des sorties d'air pour le recyclage de celui-ci.

Selon l'invention, des moyens sont prévus pour diriger l'air chaud soit vers une plaque faisant face aux produits à cuire en vue de la chauffer, soit vers l'intérieur de l'enceinte.

Ainsi, en chauffant la plaque, le four permet de réaliser une cuisson par rayonnement tandis que si l'air chaud est dirigé vers l'intérieur du four, cet air, dans un flux de préférence turbulent, provoquera la cuisson des produits à cuire par convection.

Dans un mode de réalisation préféré d'un four selon l'invention, l'air peut être dirigé partiellement vers la plaque et partiellement vers l'enceinte, la répartition de l'air pouvant s'effectuer de façon continue entre les deux destinations. Il est ainsi possible de répartir la puissance mise en oeuvre pour la cuisson à volonté entre une puissance émise par rayonnement et une puissance émise par convection.

Pour permettre une meilleure circulation de l'air, notamment pour le fonctionnement en mode turbulent, le four présente avantageusement en amont de l'enceinte une nourrice d'air d'admission.

Dans une forme de réalisation préférée, le four selon l'invention comporte par exemple une première chambre reliée à l'enceinte du four par les entrées d'air et une seconde chambre présentant une paroi mitoyenne avec l'enceinte du four et des moyens sont prévus pour répartir dans des proportions variables l'air chaud soufflé entre ces deux chambres.

Dans cette forme de réalisation, la chambre présentant une paroi mitoyenne avec l'enceinte du four est de préférence disposée entre l'enceinte du four et la chambre reliée à l'enceinte du four par les entrées d'air.

Une variante de réalisation préférée prévoit que le four comporte un caisson présentant trois chambres superposées, une troisième chambre se trouvant disposée entre les première et seconde chambres, que des premiers manchons tubulaires relient la première chambre à l'enceinte du four en traversant les troisième et seconde chambres, et que des seconds manchons tubulaires relient la troisième chambre avec l'enceinte du four, ces seconds manchons correspondant aux sorties d'air de l'enceinte du four.

Dans une autre formé de réalisation, les moyens pour diriger l'air comportent des manchons fixés sur la plaque destinée à être chauffée et disposés au niveau d'ouvertures réalisées dans la plaque et la plaque est coulissante entre une première position dans laquelle les ouvertures de la plaque se trouvent d'une part face aux ouvertures réalisées dans l'enceinte du four pour permettre l'injection d'air chaud et d'autre part face aux sorties d'air et une seconde position dans laquelle les ouvertures de la plaque sont décalées par rapport aux ouvertures permettant l'injection d'air chaud dans le four et par rapport aux sorties d'air.

Dans cette forme de réalisation, la plaque est par exemple montée sur glissières et se déplace parallèlement au plan de convoyage des produits à cuire.

Dans le cas où les produits à cuire nécessitent une cuisson à la fois par le haut et par le bas, le four peut être chauffé d'un part par le haut et d'autre part par le bas.

La présente invention concerne plus particulièrement les fours tunnels comportant des moyens de convoyage destinés à déplacer les produits à cuire dans le four dans un plan sensiblement horizontal mais s'applique aussi à des fours dans lesquels les produits à cuire sont immobiles durant la cuisson.

Les caractéristiques et avantages de l'invention ressortiront mieux de la description qui suit et du dessin schématique annexé, sur lequel :
Figure 1 représente schématiquement un four selon l'invention fonctionnant en four rayonnant,
Figure 2 montre schématiquement le four de la figure 1 en mode de fonctionnement à haute turbulence,
Figure 3 montre le four des figures 1 et 2 en mode de fonctionnement mixte, et
Figures 4 à 6 sont des vues schématiques correspondant respectivement aux figures 1 à 3 pour un second mode de réalisation d'un four selon l'invention.

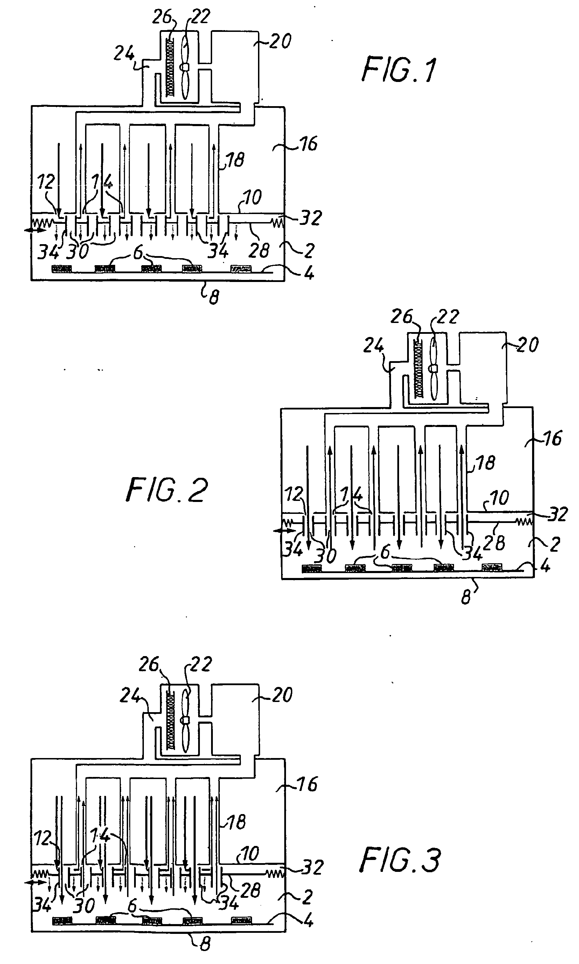

Les figures 1 à 3 montrent un premier four selon l'invention de manière schématique dans trois modes de fonctionnement distincts. La structure de ce four ressemble à celle d'un four à haute turbulence de l'art antérieur. Dans ce type de four, un circuit d'air est établi à l'intérieur d'une enceinte de four.

Dans le four selon l'invention schématisé sur le dessin, on trouve une enceinte 2 traversée par un dispositif de convoyage horizontal 4 sur lequel sont disposés des produits à cuire 6. Ces derniers circulent au niveau d'une paroi inférieure 8 de l'enceinte 2. La paroi supérieure 10, opposée à la paroi inférieure 8, comporte d'une part des entrées d'air 12 permettant l'injection d'air à l'intérieur de l'enceinte 2 et d'autre part des sorties d'air 14.

La paroi supérieure 10 constitue une cloison entre l'enceinte 2 du four et une chambre sous pression 16. Les entrées d'air 12 réalisent la communication entre la chambre sous pression 16 et l'enceinte 2 du four.

Chaque sortie d'air 14 est reliée à une conduite 18, du côté opposé à l'enceinte 2 du four tunnel, conduite 18 qui permet de guider l'air sortant du four pour le mener vers un collecteur 20. Les conduites 18 traversent la chambre sous pression 16 tandis que le collecteur 20 est placé hors de cette chambre 16.

L'air collecté dans le collecteur 20 est aspiré par une turbine 22 représenté schématiquement par une hélice, qui aspire l'air dans le collecteur 20 pour l'envoyer sous pression, par l'intermédiaire d'un conduit 24, dans la chambre sous pression 16. Des moyens de chauffage 26 sont prévus pour chauffer l'air envoyé par la turbine 22 dans la chambre sous pression 16. Tous types de moyens de chauffage peuvent être utilisés ici. Il peut s'agir d'une ou plusieurs résistances électriques, d'un brûleur à gaz, d'un échangeur, etc.... Le volume du conduit 24 et de la chambre 16 est important et constitue une nourrice d'admission pour l'air envoyé par la turbine 22 vers le four.

Le four tunnel selon l'invention représenté au dessin comporte également une plaque 28 disposée sensiblement parallèlement à la paroi supérieure 10 de l'enceinte du four. Cette plaque 28 est montée coulissante à l'intérieur de l'enceinte 2 du four, le coulissement s'effectuant dans un plan sensiblement horizontal. Dans la forme de réalisation représentée au dessin, le coulissement se fait parallèlement à la direction de convoyage des produits à cuire 6. Toutefois, il est envisageable d'avoir un coulissement réalisé dans une direction différente, par exemple perpendiculaire à la direction de convoyage.

La plaque 28 est munie d'ouvertures 30. Chaque ouverture 30 correspond soit à une entrée d'air 12 soit à une sortie d'air 14. Ces ouvertures 30 reprennent les mêmes dimensions que les entrées 12 ou sorties 14 correspondantes. Le positionnement des entrées 12 et sorties 14 ainsi que la direction de coulissement de la plaque 28 sont choisis de telle sorte que lors du coulissement de la plaque 28, les ouvertures 30 se trouvent dans une première position chacune face à une entrée 12 ou sortie 14 correspondante et dans une seconde position face à une partie pleine de la paroi supérieure 10.

Des moyens peuvent être prévus pour réaliser une étanchéité entre d'une part les entrées 12 et sorties 14 et d'autre part les ouvertures 30.

La plaque 28 est espacée de la paroi supérieure 10. Entre cette plaque 28 et la paroi supérieure 10 se trouve un espace 32 suffisant pour permettre un passage d'air. Des moyens sont prévus pour assurer une relative étanchéité au niveau des extrémités de la plaque 28 entre l'espace 32 et l'enceinte 2 du four. Ces moyens sont schématisés au dessin par des soufflets mais tout autre moyen peut être ici envisagé.

La plaque 28 étant espacée de la paroi supérieure 10, des manchons 34 sont prévus au niveau de chaque ouverture 30. Chaque manchon assure le guidage d'air entre une entrée 12 et une ouverture 30 correspondante ou entre une ouverture 30 et une sortie 14 correspondante. Ces manchons 34 se prolongent vers l'intérieur de l'enceinte 2 de manière à guider l'air injecté dans celle-ci vers les produits à cuire 6, favorisant ainsi la cuisson de ceux-ci.

Le fonctionnement du four tunnel est expliqué ci-après en référence aux figures 1 à 3 ci-jointes.

Sur la figure 1, le four tunnel fonctionne en mode rayonnant. Les turbulences d'air à l'intérieur de l'enceinte 2 sont limitées et la cuisson des produits à cuire 6 est réalisée essentiellement par rayonnement. Ce rayonnement est provoqué par le chauffage de la plaque 28.

Pour chauffer la plaque 28, de l'air chaud est envoyé sous pression dans la chambre sous pression 16. Compte tenu de la pression régnant dans cette chambre 16, l'air est injecté hors de cette chambre par les entrées d'air 12. Dans la position de la plaque 28 représentée sur la figure 1, les ouvertures 30 sont décalées par rapport aux entrées 12 et sorties 14. L'air chaud injecté par les entrées 12 ne peut donc pas pénétrer dans la partie de l'enceinte 2 du four contenant les produits à cuire 6 mais reste confiné à l'espace 32 se trouvant entre la plaque 28 et la paroi supérieure 10. Cet air chaud vient alors chauffer la plaque 28 qui rayonne en direction des produits à cuire 6. Le retour de l'air se fait par les sorties 14 et les conduites 18. Cet air recyclé est aspiré par la turbine 22 via le collecteur 20 pour être réchauffé par les moyens de chauffage 26 et être réinjecté dans la chambre 16.

Sur la figure 1, les flèches en trait plein symbolisent la circulation d'air tandis que les flèches en pointillés symbolisent le rayonnement émis par la plaque 28 en direction des produits à cuire 6.

Sur la figure 2, le four tunnel selon l'invention est schématisé en fonctionnement turbulent. Les produits à cuire 6 sont alors essentiellement cuits par convection. Dans ce cas de figure, la plaque 28 est positionnée de telle sorte que chaque ouverture 30 se trouve face, soit d'une entrée 12, soit d'une sortie 14. Dans ce cas, l'air sous pression se trouvant dans la chambre 16 est injecté par les entrées 12 et, compte tenu de la position de la plaque 28, passe directement par les ouvertures 30 via les manchons 34. Cet air chaud se retrouve alors dans l'enceinte 2 du four en contact avec les produits à cuire 6. L'air chaud circule dans l'enceinte 2 et ressort par les ouvertures 30 qui font face aux sorties 14. L'air est aspiré par la turbine 22 vers le collecteur 20 se trouvant en dépression via les conduites 18.

On retrouve dans ce cas un fonctionnement proche de celui que l'on a dans un four tunnel à haute turbulence de l'art antérieur.

Dans la position de la plaque 28 représentée sur le figure 3, le four tunnel réalise la cuisson des produits à cuire 6 à la fois par convection (turbulence) et par rayonnement. La plaque 28 se trouve ici dans une position intermédiaire entre les positions représentées sur les figures 1 et 2. Ainsi, une partie de l'air injecté par les entrées 12 circule dans l'espace 32 se trouvant entre la paroi supérieure 10 et la plaque 28 et une partie de cet air est injecté en mode turbulent dans l'enceinte 2 du four aux environs des produits à cuire 6. L'air injecté dans l'espace 32 vient chauffer la plaque 28 qui rayonne alors vers les produits à cuire 6 tandis que l'air injecté directement vers les produits à cuire 6 cuit ces derniers par convection.

Comme on peut le constater, ce four tunnel est de structure simple et permet de réaliser à la fois un chauffage par convection et un chauffage par rayonnement.

Le déplacement de la plaque 28 peut être réalisé par tous moyens. Il peut s'agir d'un réglage manuel ou bien d'un réglage automatique. Dans ce dernier cas, il est envisageable de réaliser au sein du même four pour un même ensemble de produits à cuire une cuisson à la fois par rayonnement et par convection. Le coulissement de la plaque 28 permet de faire varier dans une très large plage la proportion d'énergie de cuisson envoyée aux produits à cuire par convection et la proportion d'énergie envoyée aux produits à cuire par rayonnement.

La description faite ci-dessus montre un chauffage des produits à cuire par le haut. Un système tout à fait identique peut être réalisé pour un chauffage par le bas des produits à cuire. On peut soit prévoir une seconde chambre sous pression avec une seconde turbine et des seconds moyens de chauffage en dessous de l'enceinte du four ou bien il est possible de prévoir que la chambre sous pression entoure l'enceinte du four de manière à pouvoir injecter dans cette enceinte de l'air chaud à la fois par le haut et par le bas. Bien entendu, un chauffage latéral est également possible.

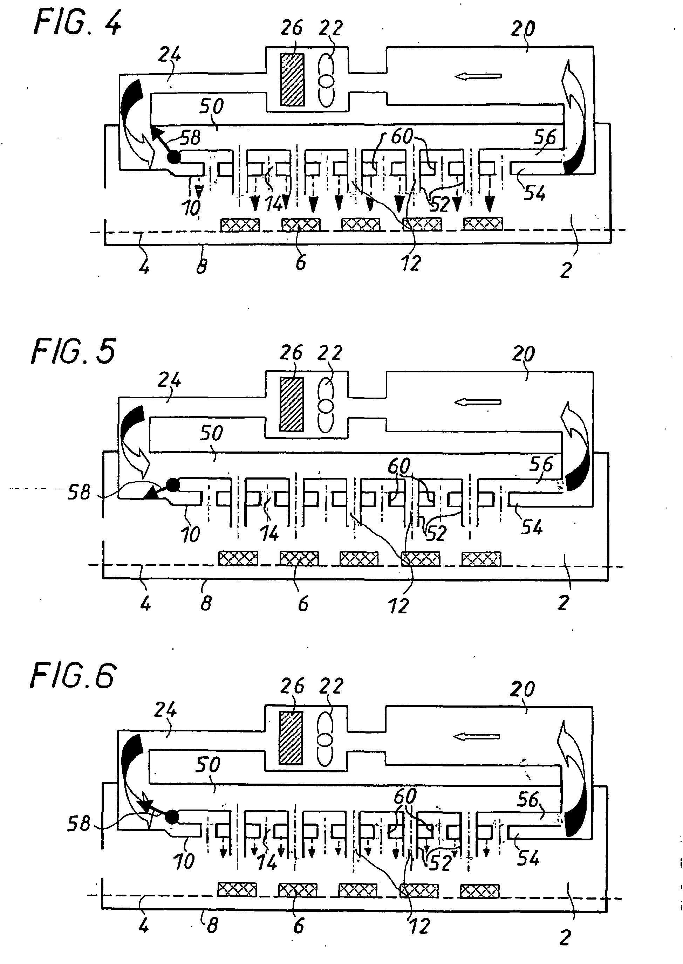

Les figures 4 à 6 représentent schématiquement un second mode de réalisation d'un four selon l'invention. Les éléments semblables à ceux du premier mode de réalisation reprennent les mêmes références que celles portées sur les figures 1 à 3.

On retrouve ainsi une enceinte 2 traversée par un dispositif de convoyage horizontal sur lequel sont disposés des produits à cuire 6. L'enceinte 2 comporte une paroi inférieure 8 et une paroi supérieure 10 présentant des entrées d'air 12 et des sorties d'air 14.

Dans cette seconde forme de réalisation, on retrouve également un collecteur d'air 20, une turbine 22 et un conduit 24 pour envoyer l'air sortant de la turbine vers l'enceinte du four 2. Des moyens de chauffage 26 chauffent l'air en sortie de la turbine 22.

En partie supérieure, le four comporte un caisson voisin de la paroi supérieure 10. Ce caisson est divisé en trois chambres. Une première chambre 50, en position supérieure sur le dessin, est reliée par des premiers manchons 52 à l'enceinte du four. Une seconde chambre 54 est mitoyenne de l'enceinte 2 du four. La limite entre cette seconde chambre 54 et l'enceinte du four est réalisée par la paroi supérieure 10. Une troisième chambre 56 est disposée entre les première et seconde chambres. Les seconde 54 et troisième 56 chambres sont reliées au collecteur 20 tandis que les première 50 et seconde 54 chambres sont alimentées en air par le conduit 24. Un volet 58 réalise la répartition d'air entre les première 50 et seconde 54 chambres.

Les trois chambres 50, 54 et 56 sont étanches l'une par rapport à l'autre. Les premiers manchons 52 sont fixés sur une plaque réalisant la séparation entre la troisième et la première chambre et traversent les seconde et troisième chambres pour relier l'enceinte 2 du four à la première chambre 50. Des seconds manchons 60 relient quant à eux l'enceinte 2 du four à la troisième chambre 56.

Cette troisième chambre 56 appelée aussi chambre de retour de convection reçoit ainsi de l'air en provenance de l'enceinte du four 2 et comporte une sortie vers le collecteur 20.

La seconde chambre 54 est aussi appelée chambre de rayonnement. C'est celle dont une face, la paroi supérieure 10, est en vis à vis des produits à cuire 6. Cette chambre 54 est reliée d'un côté à la conduite d'admission 24 et de l'autre côté au collecteur 20 de retour.

La première chambre 50, avec le conduit d'admission 24, forment une nourrice d'admission alimentant les premiers manchons 52, ou tuyères d'éjection, pour envoyer l'air soufflé par la turbine 22 dans l'enceinte 2 du four.

Le fonctionnement du four tunnel est expliqué ci-après en référence aux figures 4 à 6 ci-jointes.

Sur la figure 4, le four tunnel selon l'invention est schématisé en mode de transfert radiatif. Les turbulences d'air à l'intérieur de l'enceinte 2 sont limitées à celles dues à la convection naturelle et la cuisson des produits à cuire 6 est réalisée essentiellement par le champ de rayonnement émis par la paroi supérieure 10. Ce rayonnement est provoqué par le chauffage -par l'air chaud conduit dans la chambre de rayonnement par le volet 58 complètement levé- de la paroi 10 qui constitue la partie inférieure de la chambre de rayonnement. L'air chaud est envoyé sous pression directement dans la chambre de rayonnement 54. Il ne peut donc pas pénétrer dans la partie de l'enceinte 2 du four contenant les produits à cuire 6 mais reste confiné à la seconde chambre 54. Cet air chaud vient alors chauffer la paroi 10 qui rayonne en direction des produits à cuire 6. Le retour de l'air se fait par le collecteur 20. Cet air recyclé est aspiré par la turbine 22 pour être réchauffé par les moyens de chauffage 26 et être réinjecté dans la conduite 24.

Sur la figure 4, les flèches en trait plein symbolisent la circulation d'air tandis que les flèches en pointillés symbolisent le rayonnement émis par la paroi 10 en direction des produits à cuire 6.

Sur la figure 5, le four tunnel selon l'invention est schématisé en mode de transfert convectif turbulent. Les produits à cuire 6 sont alors essentiellement cuits par convection. Dans ce cas de figure, l'air chaud sous pression, conduit dans la première chambre 50 par le volet 58 complètement baissé, est éjecté par les tuyères 52. Il passe directement alors dans l'enceinte 2 du four en contact avec les produits à cuire 6. L'air chaud circule dans l'enceinte 2 et repart par les sorties 14 dans la chambre de retour de convection 56. L'air est aspiré par la turbine 22 vers le collecteur 20 se trouvant en dépression.

On retrouve dans ce cas un fonctionnement identique à celui que l'on a dans un four tunnel à haute turbulence de l'art antérieur.

Sur la figure 6, le four tunnel selon l'invention est schématisé en mode de transfert mixte. Le four tunnel réalise la cuisson des produits à cuire 6 à la fois par convection (turbulence) et par rayonnement. Le volet 58 se trouve ici dans une position intermédiaire entre les positions représentées sur les figures 4 et 5. Ainsi, une partie de l'air injecté par la conduite 24 circule dans la première chambre 50 et est injecté en mode turbulent dans l'enceinte 2 du four vers les produits à cuire 6. L'autre partie d'air est injecté dans la chambre de rayonnement 54 et vient chauffer la paroi 10 qui rayonne alors vers les produits à cuire 6 tandis que l'air éjecté directement vers les produits à cuire 6 cuit ces derniers par convection.

Comme on peut le constater, ce four tunnel est de structure simple et permet de réaliser à la fois un chauffage par convection et un chauffage par rayonnement. Le déplacement du volet 58 peut être réalisé par tous moyens. Il peut s'agir d'un réglage manuel ou bien d'un réglage automatique. Dans ce dernier cas, il est envisageable de réaliser au sein du même four, pour un même ensemble de produits à cuire, une cuisson à la fois par rayonnement et par convection avec un mixage des deux modes variable à volonté pendant un même cycle de cuisson. Le déplacement du volet 58 permet de faire varier dans une très large plage la proportion d'énergie de cuisson envoyée aux produits à cuire par convection et la proportion d'énergie envoyée aux produits à cuire par rayonnement.

La description faite ci-dessus montre un chauffage des produits à cuire par le haut. Un système tout à fait identique peut être réalisé pour un chauffage par le bas des produits à cuire. On peut soit prévoir un second caisson avec une seconde turbine et des seconds moyens de chauffage en dessous de l'enceinte du four ou bien il est possible de prévoir que les collecteurs d'admission et de retour entourent l'enceinte du four de manière à pouvoir injecter dans cette enceinte de l'air chaud à la fois par le haut et par le bas. Bien entendu, un chauffage latéral est également possible.

Dans les deux fours présentés, un dispositif de convoyage est prévu. Bien entendu, le système de chauffage du four est indépendant du convoyage des produits à cuire et la technique décrite ci-dessus peut également concerner des fours dans lesquels les produits à cuire sont immobiles.

La présente invention ne se limite pas aux détails des formes de réalisation décrites ci-dessus mais comprend également les variantes de réalisation à la portée de l'homme du métier, dans le cadre des revendications ci-après.

## Revendications

1. Four, notamment four tunnel, comportant une enceinte (2) destinée à recevoir des produits à cuire (6) sur un plan sensiblement horizontal, des moyens (22) pour souffler à grande vitesse de l'air dans le four ainsi que des moyens de chauffage (26) d'air, l'enceinte (2) du four présentant d'une part des entrées d'air (12) permettant l'injection d'air à l'intérieur de celle-ci et d'autre part des sorties d'air (14) pour le recyclage de celui-ci,
**caractérisé en ce que** des moyens (34 ; 58) sont prévus pour diriger l'air chaud soit vers une plaque (28 ; 10) faisant face aux produits à cuire (6) en vue de la chauffer, soit vers l'intérieur de l'enceinte (2).

2. Four selon la revendication 1, **caractérisé en ce que** l'air peut être dirigé partiellement vers la plaque (28) et partiellement vers l'enceinte (2), la répartition de l'air pouvant s'effectuer de façon continue entre les deux destinations.

3. Four selon l'une des revendications 1 ou 2, **caractérisé en ce qu'**il présente en amont de l'enceinte (2) une nourrice d'air d'admission (24, 16 ; 24, 50).

4. Four selon l'une des revendications 1 à 3, **caractérisé en ce qu'**il comporte une première chambre (50) reliée à l'enceinte du four par les entrées d'air (12) et une seconde chambre (54) présentant une paroi (10) mitoyenne avec l'enceinte (2) du four et **en ce que** des moyens (58) sont prévus pour répartir dans des proportions variables l'air chaud soufflé entre ces deux chambres.

5. Four selon la revendication 4, **caractérisé en ce que** la chambre (54) présentant une paroi (10) mitoyenne avec l'enceinte (2) du four est disposée entre l'enceinte du four et la chambre (50) reliée à l'enceinte du four par les entrées d'air.

6. Four selon l'une des revendications 4 ou 5, **caractérisé en ce qu'**il comporte un caisson présentant trois chambres (50, 54, 56) superposées, une troisième chambre (56) se trouvant disposée entre les première (50) et seconde (54) chambres, **en ce que** des premiers manchons tubulaires (52) relient la première chambre (50) à l'enceinte (2) du four en traversant les troisième et seconde chambres, et **en ce que** des seconds manchons tubulaires (60) relient la troisième chambre (56) avec l'enceinte du four, ces seconds manchons (60) correspondant aux sorties d'air (14) de l'enceinte du four.

7. Four selon l'une des revendications 1 à 3, **caractérisé en ce que** les moyens pour diriger l'air comportent des manchons (34) fixés sur la plaque (28) destinée à être chauffée et disposés au niveau d'ouvertures (30) réalisées dans la plaque (28), et **en ce que** la plaque (28) est coulissante entre une première position dans laquelle les ouvertures (30) de la plaque se trouvent d'une part face aux ouvertures (12) réalisées dans l'enceinte du four pour permettre l'injection d'air chaud et d'autre part face aux sorties d'air (14) et une seconde position dans laquelle les ouvertures (30) de la plaque sont décalées par rapport aux ouvertures (12) permettant l'injection d'air chaud dans le four et par rapport aux sorties d'air (14).

8. Four selon la revendication 7, **caractérisé en ce que** la plaque (28) est montée sur glissières et se déplace parallèlement au plan de convoyage des produits à cuire (6).

9. Four selon l'une des revendications 1 à 8, **caractérisé en ce qu'**il est chauffé d'un part par le haut et d'autre part par le bas.

10. Four selon l'une des revendications 1 à 9, **caractérisé en ce qu'**il comporte des moyens de convoyage (4) destinés à déplacer les produits à cuire (6) dans le four dans un plan sensiblement horizontal.

## Claims

1. Oven, particularly a tunnel oven, comprising an enclosure (2) intended to accommodate products for cooking (6) on a roughly horizontal plane, means (22) for blowing air into the oven at high speed, and means (26) for heating the air, the enclosure (2) of the oven having, on the one hand, air inlets (12) allowing air to be injected into it and, on the other hand, air outlets (14) for recirculating this air,
**characterized in that** means (34; 58) are provided for directing the hot air either toward a plate (28; 10) facing the products for cooking (6) with a view to heating it, or toward the inside of the enclosure (2).

2. Oven according to Claim 1, **characterized in that** the air may be directed partially toward the plate (28) and partially toward the enclosure (2), it being possible for the air to be split continuously between the two destinations.

3. Oven according to one of Claims 1 and 2, **characterized in that** it has, upstream of the enclosure (2), an inlet air manifold (24, 16; 24, 50).

4. Oven according to one of Claims 1 to 3, **characterized in that** it comprises a first chamber (50) connected to the enclosure of the oven by the air inlets (12) and a second chamber (54) having a party wall (10) with the enclosure (2) of the oven and **in that** means (58) are provided for splitting the blown hot air between these two chambers in variable proportions.

5. Oven according to Claim 4, **characterized in that** the chamber (54) that has a party wall (10) with the enclosure (2) of the oven is arranged between the enclosure of the oven and the chamber (50) connected to the enclosure of the oven by the air inlets.

6. Oven according to one of Claims 4 and 5, **characterized in that** it comprises a casing having three superposed chambers (50, 54, 56), a third chamber (56) lying between the first (50) and second (54) chambers, **in that** first tubular sleeve tubes (52) connect the first chamber (50) to the enclosure (2) of the oven, passing through the third and second chambers, and **in that** second tubular sleeve tubes (60) connect the third chamber (56) to the enclosure of the oven, these second sleeve tubes (60) corresponding to the oven enclosure air outlets (14).

7. Oven according to one of Claims 1 to 3, **characterized in that** the means for directing the air comprise sleeve tubes (34) which are fixed to the plate (28) that is intended to be heated and which are arranged at openings (30) made in the plate (28), and **in that** the plate (28) can slide between a first position in which the openings (30) in the plate lie, on the one hand, facing the openings (12) made in the enclosure of the oven to allow hot air to be injected and, on the other hand, facing the air outlets (14), and a second position in which the openings (30) in the plate are offset with respect to the openings (12) allowing hot air to be injected into the oven and with respect to the air outlets (14).

8. Oven according to Claim 7, **characterized in that** the plate (28) is mounted on slideways and runs parallel to the plane in which the products for cooking (6) are conveyed.

9. Oven according to one of Claims 1 to 8, **characterized in that** it is heated, on the one hand, from above and, on the other hand, from beneath.

10. Oven according to one of Claims 1 to 9, **characterized in that** it comprises conveying means (4) intended to move the products for cooking (6) in the oven in a roughly horizontal plane.

## Patentansprüche

1. Ofen, insbesondere Tunnelofen, mit einem Raum (2), um zu backende Produkte (6) in einer im Wesentlichen horizontalen Ebene aufzunehmen, Einrichtungen (22), um Luft mit hoher Geschwindigkeit in den Ofen zu blasen, sowie Heizeinrichtungen (26) der Luft, wobei der Ofenraum (2) einerseits Lufteingänge (12) umfasst, die das Einblasen der Luft in sein Inneres ermöglichen, und andererseits Luftausgänge (14), um diese Luft zu recyceln,
**dadurch gekennzeichnet, dass** Einrichtungen (34; 58) vorgesehen sind, um die heiße Luft entweder auf eine den zu backenden Produkten (6) gegenüberstehende Platte (28; 10) - um diese zu erhitzen - oder ins Innere des Raums (2) zu leiten.

2. Ofen nach Anspruch 1, **dadurch gekennzeichnet, dass** die Luft partiell auf die Platte (28) geleitet werden kann und partiell in den Raum (2), wobei die Verteilung der Luft zwischen den beiden Zielen in kontinuierlicher Weise erfolgen kann.

3. Ofen nach einem der Ansprüche 1 oder 2, **dadurch gekennzeichnet, dass** er einen dem Raum (2) vorgeordneten Lufteinspeisungsverteilungskasten (24, 16; 24, 50) umfasst.

4. Ofen nach einem der Ansprüche 1 bis 3, **dadurch gekennzeichnet, dass** er eine erste Kammer (50) umfasst, die mit dem Ofenraum durch Lufteingänge (12) verbunden ist, und eine zweite Kammer (54), die mit dem Ofenraum (2) eine gemeinsame Wand (10) aufweist, und **dadurch**, dass Einrichtungen (58) vorgesehen sind, um die heiße Blasluft in variablen Proportionen auf die beiden Kammern zu verteilen.

5. Ofen nach Anspruch 4, **dadurch gekennzeichnet, dass** die Kammer (54), die mit dem Ofenraum (2) eine gemeinsame Wand (10) aufweist, zwischen dem Ofenraum und der Kammer (50) angeordnet ist, die mit dem Ofen durch Lufteingänge verbunden ist.

6. Ofen nach einem der Ansprüche 4 oder 5, **dadurch gekennzeichnet, dass** er einen Kasten mit drei übereinanderliegenden Kammern (50, 54, 56) umfasst, wobei sich zwischen der ersten (50) und der zweiten (54) Kammer eine dritte Kammer (56) befindet, und **dadurch**, dass erste Rohrstutzen (52) die erste Kammer (50) mit dem Ofenraum (2) verbinden, indem sie die dritte und zweite Kammer durchqueren, sowie **dadurch**, dass zweite Rohrstutzen (60) die dritte Kammer (56) mit dem Ofenraum verbinden, wobei diese zweiten Stutzen (60) den Luftausgängen (14) des Ofenraums entsprechen.

7. Ofen nach einem der Ansprüche 1 bis 3, **dadurch gekennzeichnet, dass** die Luftleiteinrichtungen an der beheizten Platte (28) befestigte Stutzen (34) umfassen, angebracht in den in der Platte (28) vorgesehenen Öffnungen (30), und **dadurch**, dass die Platte (28) verschiebbar ist zwischen einer ersten Position, in der die Öffnungen (30) der Platte einerseits den Öffnungen (12), die in dem Ofenraum zur Einspeisung der Heißluft vorgesehen sind, und andererseits den Luftausgangsöffnungen (14) gegenüberstehen, und einer zweiten Position, in der die Öffnungen (30) der Platte versetzt sind in Bezug auf die Öffnungen (12) zur Heißlufteinspeisung in den Ofen und in Bezug auf die Luftausgänge (14).

8. Ofen nach Anspruch 7, **dadurch gekennzeichnet, dass** die Platte (28) auf Gleit- bzw. Führungsschienen montiert ist und sich parallel zu der Beförderungsebene der zu backenden Produkte (6) verschiebt.

9. Ofen nach einem der Ansprüche 1 bis 8, **dadurch gekennzeichnet, dass** er einerseits von oben und andererseits von unten beheizt wird.

10. Ofen nach einem der Ansprüche 1 bis 9, **dadurch gekennzeichnet, dass** er Fördereinrichtungen (4) umfasst, um die zu backenden Produkte (6) in dem Ofen in einer im Wesentlichen horizontalen Ebene zu verschieben.
